# FASCICULE DE BREVET EUROPEEN

(11) **EP 4 275 988 B1**
(45) Date de publication et mention de la délivrance du brevet: **22.05.2024**
(21) Numéro de dépôt: 23172748.8
(22) Date de dépôt: 11.05.2023
(51) Int. Cl.: B61H 5/00, F16D 65/12

(54) **DISQUE DE FREINAGE D'UN FREIN À DISQUE D'UN VÉHICULE, FREIN À DISQUE ET ESSIEU ASSOCIÉS**
BREMSSCHEIBE EINER SCHEIBENBREMSE EINES FAHRZEUGS, ENTSPRECHENDE SCHEIBENBREMSE UND ACHSE
BRAKE DISC OF A DISC BRAKE OF A VEHICLE, AND ASSOCIATED DISC BRAKE AND AXLE

(30) Priorité: 12.05.2022 FR 2204511
(43) Date de publication de la demande: 15.11.2023
(73) Titulaire: ALSTOM Holdings, 93400 Saint-Ouen-sur-Seine (FR)
(72) Inventeur: KAKANOU-KILI, Jean-Jacques, 89100 SENS (FR); JANIN, Gerald, 75013 PARIS (FR)
(74) Mandataire: Lavoix

(56) Documents cités:
- WO-A1-97/40285
- DE-A1- 2 644 223
- DE-B- 1 151 276
- FR-A1- 2 306 110

## Description

La présente invention concerne un disque de freinage d'un frein à disque d'un véhicule, notamment un véhicule ferroviaire.

Lorsqu'un tel disque de freinage coopère avec un élément de freinage, par exemple, une plaquette de frein du véhicule, le disque permet la transmission d'un couple de freinage depuis l'élément de freinage à un arbre rotatif sur lequel sont montées des roues du véhicule. En particulier, lors du freinage, le couple de freinage est généré par friction entre l'élément de freinage et le disque de freinage.

Toutefois, lorsque la vitesse de rotation de l'arbre rotatif est particulièrement élevée, par exemple, dans le cas de trains à grande vitesse, un tel disque de freinage doit supporter une friction importante, générant une chaleur et des contraintes mécaniques particulièrement élevées. Cette chaleur et ces contraintes mécaniques peuvent endommager le disque de freinage.

Un but de l'invention est de fournir un disque de freinage permettant un freinage efficace tout en préservant l'intégrité du disque. Le document DE 11 51 276 B décrit un frein à disque ferroviaire classique, avec des pièces formées en acier moulé général.

A cet effet, l'invention concerne un disque de freinage d'un frein à disque d'un véhicule, notamment d'un véhicule ferroviaire, comprenant :
- une partie cylindrique centrale s'étendant sensiblement selon un axe de rotation et destinée à être solidaire en rotation d'un arbre rotatif du véhicule ;
- une partie annulaire centrée sur l'axe de rotation, s'étendant radialement par rapport à l'axe de rotation à l'écart de la partie cylindrique centrale et destinée à entrer en contact avec un élément de freinage du frein à disque ; et
- une entretoise reliant la partie cylindrique centrale à la partie annulaire ;

la partie cylindrique centrale, l'entretoise et la partie annulaire étant venues de matière,
la partie cylindrique centrale, l'entretoise et la partie annulaire étant formées par de l'acier 28CDV5.

L'utilisation d'un acier 28CDV5 pour réaliser l'ensemble d'un disque de freinage d'une seule pièce permet au disque de freinage de résister à une friction importante lors du freinage, notamment lorsque le véhicule se déplace à une vitesse élevée. Ainsi, un tel disque de freinage est adapté, notamment, pour être utilisé dans des trains à grande vitesse, pour lesquels une chaleur importante est générée lors du freinage.

En outre, l'invention permet de réduire ou même d'éviter l'utilisation d'éléments de fixation (comme par exemple des boulons) au sein du disque de freinage. Il est ainsi permis de réduire le risque de désolidarisation de tels éléments de fixation et donc d'éviter la perte de tels éléments ou leur desserrage.

Egalement, l'utilisation d'acier 28CDV5 permet de faciliter la réalisation du disque.

Suivant des modes particuliers de réalisation, le véhicule comprend également l'une ou plusieurs des caractéristiques suivantes, prises isolément ou selon toute combinaison techniquement envisageable :
- la partie annulaire est déplaçable par rapport à la partie cylindrique centrale entre une position de repos dans laquelle l'entretoise est dans une position de repos et une position de contrainte dans laquelle l'entretoise subit une contrainte mécanique, la partie annulaire étant déplacée de la position de repos vers la position de contrainte lorsqu'une force de freinage est appliquée sur la partie annulaire, l'entretoise étant déformable élastiquement et étant contrainte vers sa position de repos ;
- l'entretoise présente une section radiale en forme de S, la section radiale de l'entretoise présentant des première, deuxième et troisième branches, la première branche s'étendant selon une première direction à partir de la partie annulaire vers la partie cylindrique centrale jusqu'à une première extrémité, la deuxième branche s'étendant selon une deuxième direction depuis la première extrémité jusqu'à une deuxième extrémité et la troisième branche s'étendant selon une troisième direction depuis la deuxième extrémité jusqu'à la partie cylindrique centrale ;
- la section radiale de l'entretoise comprend un coude entre la première branche et la deuxième branche, présentant un premier profil interne tourné vers la partie annulaire et un premier profil externe opposé au premier profil interne, le premier profile interne présentant un premier rayon de courbure interne compris entre 10 mm et 18 mm et le premier profile externe présentant un premier rayon de courbure externe compris entre 18 mm et 26 mm ;
- la section radiale de l'entretoise comprend un coude entre la deuxième branche et la troisième branche, présentant un deuxième profil interne tourné vers la partie cylindrique centrale et un deuxième profile externe opposé au deuxième profil interne, le deuxième profil externe présentant un deuxième rayon de courbure externe compris entre 6 mm et 18 mm et le deuxième profil interne présentant un deuxième rayon de courbure interne compris entre 2 mm et 10 mm ;
- la deuxième direction est sensiblement parallèle à l'axe de rotation, la deuxième branche présentant avantageusement une longueur mesurée selon l'axe de rotation comprise entre 25 mm et 50 mm ;
- les branches présentent chacune une épaisseur mesurée perpendiculairement à leur direction respective comprise entre 4 mm et 12 mm ;
- la partie cylindrique centrale s'étend axialement entre deux extrémités axiales, la partie cylindrique centrale présentant une longueur mesurée axialement entre les deux extrémités axiales, la troisième branche s'étendant jusqu'à une des deux extrémités axiales de la partie cylindrique centrale, la partie annulaire s'étendant dans un plan d'extension sensiblement orthogonal à l'axe de rotation, le plan d'extension traversant la partie cylindrique centrale sensiblement en le milieu de sa longueur.

L'invention concerne également un frein à disque d'un véhicule, notamment un véhicule ferroviaire, comprenant un disque de freinage tel que décrit précédemment et un élément de freinage, l'élément de freinage étant déplaçable axialement par rapport à l'axe de rotation entre une position inactive dans laquelle l'élément de freinage est à l'écart de la partie annulaire et une position active dans laquelle l'élément de freinage est en contact avec la partie annulaire et applique une force de freinage sur la partie annulaire.

L'invention concerne en outre un essieu d'un véhicule, notamment d'un véhicule ferroviaire, comprenant un arbre rotatif et un disque de freinage tel que décrit précédemment, l'arbre rotatif s'étendant selon l'axe de rotation, la partie cylindrique centrale étant solidaire en rotation de l'arbre rotatif du véhicule.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe selon une section radiale d'une portion d'un essieu d'un véhicule comprenant un frein à disque comportant un disque de freinage selon l'invention ; et
- la Fig. 2 est une vue agrandie de l'encadré II de la Fig. 1.

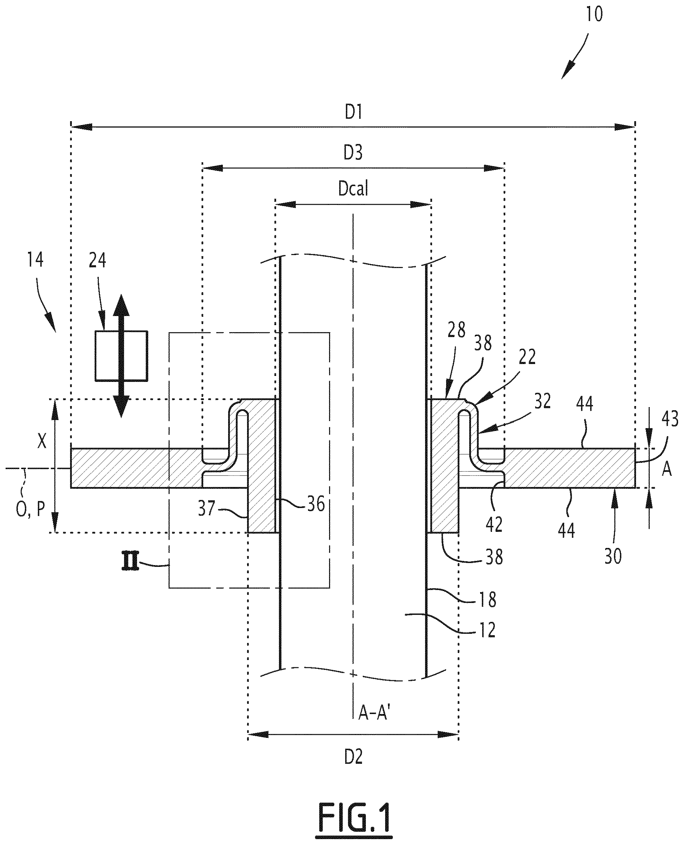

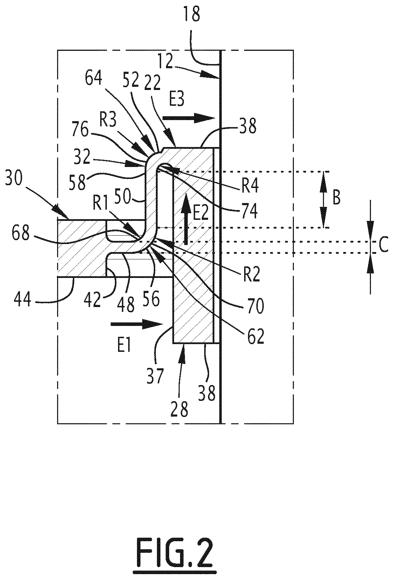

En référence aux Fig. 1 et 2, on décrit une portion d'un essieu 10 d'un véhicule.

Le véhicule est, par exemple, un véhicule de transport terrestre tel qu'un véhicule ferroviaire ou un véhicule automobile. En particulier, le véhicule est un véhicule ferroviaire tel qu'un train à grande vitesse. Un train à grande vitesse est défini comme étant un train apte à rouler à une vitesse supérieure à 250 km/h.

L'essieu 10 comprend au moins deux roues (non-illustrées), un arbre rotatif 12 reliant deux des au moins deux roues et un frein à disque 14.

L'arbre rotatif 12 s'étend selon un axe de rotation A-A'. L'arbre rotatif 12 et les deux roues qu'il relie sont destinés à être entraînés en rotation autour de l'axe de rotation A-A' directement par un moteur du véhicule dans le cas d'un essieu moteur ou indirectement pour un essieu non directement entraîné par un moteur, la rotation de l'essieu entraînant un déplacement du véhicule.

L'arbre rotatif 12 présente, par exemple, une section droite circulaire et comprend une surface externe 18. Comme il sera décrit plus tard, la surface externe 18 est solidaire d'au moins une portion du frein à disque 14.

Le frein à disque 14 comprend un disque de freinage 22, notamment solidaire en rotation de l'arbre rotatif 12, et au moins un élément de freinage 24.

L'élément de freinage 24 est déplaçable axialement par rapport à l'axe de rotation A-A' entre une position inactive (visible sur la Fig. 1) dans laquelle l'élément de freinage 24 est à l'écart d'une partie annulaire 30 du disque de freinage et une position active dans laquelle l'élément de freinage 24 est en contact avec la partie annulaire 30 et applique une force de freinage sur la partie annulaire 30.

Dans la position active, l'élément de freinage 24 entraîne un freinage de la rotation du disque de freinage 22 et de l'arbre rotatif 12 par friction entre l'élément de freinage 24 et la partie annulaire 30.

L'élément de freinage 24 est, par exemple, une plaquette de frein du véhicule. La plaquette de frein est, par exemple, portée par une pince (non-illustrée) s'étendant de part et d'autre du disque de freinage 22 selon l'axe de rotation A-A'. Avantageusement, la pince comprend deux branches et une plaquette de frein est portée sur chaque branche. Lorsque la pince se ferme, chaque plaquette de frein est rapprochée du disque de freinage 22 jusqu'à ce que les plaquettes de frein soient en contact contre le disque de freinage 22, de part et d'autre du disque de freinage 22.

Le disque de freinage 22 comprend une partie cylindrique centrale 28, la partie annulaire 30 et une entretoise 32 reliant la partie cylindrique centrale 28 à la partie annulaire 30.

Une section du disque de freinage 22 s'étend sensiblement dans un plan O orthogonal à l'axe de rotation A-A'.

Le disque de freinage 22 présente un diamètre D1, mesuré dans le plan orthogonal O entre deux extrémités radiales opposées du disque 22. Le diamètre D1 du disque de freinage est, par exemple, compris entre 390 mm et 680 mm, avantageusement sensiblement égal à 640 mm.

La partie cylindrique centrale 28, la partie annulaire 30 et l'entretoise 32 sont venues de matière et sont formées par de l'acier 28CDV5. Ainsi, le disque de freinage 22 est réalisé en un seul matériau spécifiquement développé pour résister à une friction importante entre l'élément de freinage 24 et la partie annulaire 30 (résistance aux hautes températures, à l'abrasion. En particulier, l'acier 28CDV5 est adapté pour résister à une friction haute vitesse, rencontrée notamment dans les trains à grande vitesse. En particulier, les propriétés mécaniques et le comportement thermique de l'acier 28CDV5 permettent d'atteindre une résistance à l'usure à chaud et une résistance aux chocs thermiques améliorées.

Par exemple, la partie cylindrique centrale 28, la partie annulaire 30 et l'entretoise 32 sont forgées par fibrage. Par « fibrage », on entend que la structure interne de l'acier est formée de fibres qui sont orientées en fonctions des sollicitations prévues pour la partie cylindrique centrale 28, la partie annulaire 30 et l'entretoise 32.

La partie cylindrique centrale 28 est, par exemple, formée par un manchon cylindrique, notamment de section droite sensiblement circulaire. Ici, elle permet de transmettre la transmission d'un couple de rotation entre l'arbre rotatif 12 à la partie annulaire 30.

Comme illustré sur la Fig. 1, la partie cylindrique centrale 28 s'étend sensiblement selon l'axe de rotation A-A'. En particulier, l'axe du manchon cylindrique qui forme la partie cylindrique centrale 28 et l'axe de rotation A-A' sont confondus.

La partie cylindrique centrale 28 est solidaire en rotation de l'arbre rotatif 12 du véhicule, c'est-à-dire qu'elle tourne avec l'arbre rotatif 12 lorsque celui-ci est entraîné en rotation. En particulier, la partie cylindrique centrale 28 présente un passage cylindrique interne s'étendant selon l'axe de rotation A-A' et dans lequel s'étend l'arbre rotatif 14. La partie cylindrique centrale 28 comprend une surface interne 36 orientée vers l'arbre rotatif 14, délimitant le passage cylindrique interne, et une surface externe 37 opposée à la surface interne 36, orientée vers la partie annulaire 30. Comme illustré sur la Fig. 1, la surface interne 36 de la partie cylindrique centrale 28 et la surface externe 18 de l'arbre rotatif 12 sont en appui l'une contre l'autre de sorte que l'arbre rotatif 14 et la partie cylindrique centrale 28 sont solidaires en rotation. En d'autres termes, la partie cylindrique centrale 28 est ajustée autour de l'arbre rotatif 14.

Ici, la partie cylindrique centrale 28 s'étend axialement, c'est-à-dire selon l'axe de rotation A-A', entre deux extrémités axiales 38. La partie cylindrique centrale 28 présente une longueur X mesurée axialement entre les deux extrémités axiales 38. La longueur X de la partie cylindrique centrale 28, correspondant à son épaisseur, est, par exemple, comprise entre 80 mm et 160 mm, notamment sensiblement égale à 150 mm.

La partie cylindrique centrale 28 présente un diamètre externe D2 mesuré dans le plan orthogonal O entre deux points diamétralement opposés de la surface externe 37 de la partie cylindrique centrale 28. Le diamètre externe D2 de la partie cylindrique centrale 28 est, par exemple, compris entre 180 mm à 260 mm, notamment sensiblement égal à 236 mm.

La partie cylindrique centrale 28 présente un diamètre interne D_{cal} mesurée dans le plan orthogonal O entre deux points diamétralement opposés de la surface interne 36 de la partie cylindrique centrale 28. Le diamètre interne D_{cal} de la partie cylindrique centrale 28 est, par exemple, compris entre 150 mm et 235 mm, notamment sensiblement égal à 190 mm.

La partie cylindrique centrale 28 est, par exemple, communément appelée moyeu du disque de freinage 22.

La partie annulaire 30 est, par exemple, formé par un anneau s'étendant autour de la partie centrale cylindrique 28.

Comme illustré sur la Fig. 1, la partie annulaire 30 est centrée sur l'axe de rotation A-A'. En particulier, le centre de l'anneau qui forme la partie annulaire 30 coïncide avec l'axe de rotation A-A'.

La partie annulaire 30 s'étend radialement par rapport à l'axe de rotation A-A' à l'écart de la partie cylindrique centrale 28. Selon l'exemple illustré sur les Fig. 1 et 2, la partie annulaire 30 s'étend dans un plan d'extension P sensiblement orthogonal à l'axe de rotation A-A' et sensiblement parallèle au plan O. Le plan d'extension P traverse la partie cylindrique centrale 28 sensiblement en le milieu de sa longueur X.

La partie annulaire 30 comprend une surface interne 42 orientée vers la partie cylindrique centrale 28 et une surface externe 43 opposée à ladite surface interne 42.

Comme visible sur la Fig. 1, le diamètre D1 du disque de freinage 22 est mesuré dans le plan orthogonal O entre deux points diamétralement opposés de la surface externe 43 de la partie annulaire 30. Le diamètre D1 du disque de freinage 22 correspond donc à un diamètre externe de la partie annulaire 30.

Ici, la partie annulaire 30 présente, en outre, un diamètre interne D3 mesuré dans le plan orthogonal O entre deux points diamétralement opposés de la surface interne 42 de la partie annulaire 30. Le diamètre interne D3 de la partie annulaire est, par exemple, compris entre 250 mm et 400 mm, notamment sensiblement égal à 340 mm.

La partie annulaire 30 comprend, en outre, deux surfaces latérales 44 s'étendant sensiblement parallèlement au plan orthogonal O. Chaque surface latérale 44 relie la surface interne 42 et la surface externe 43 de la partie annulaire. Comme illustré sur l'exemple des Fig. 1 et 2, les surfaces latérales 44 sont sensiblement planes. Selon une variante non illustrée, les surfaces latérales 44 comprennent une pluralité d'orifices dont une profondeur est, par exemple, comprise entre 10 mm et 20 mm notamment sensiblement égale à 15 mm. Selon cette variante, on dit communément que la partie annulaire 30 est « ventilée ».

Comme il sera décrit plus bas, la partie annulaire 30 est destinée à entrer en contact avec l'élément de freinage 24 du frein à disque 14, notamment lorsqu'un freinage du véhicule est souhaité. En particulier, une ou chaque surface latérale 44 de la partie annulaire 30 est destinée à entrer en contact avec l'élément de freinage 24.

Comme illustré sur la Fig. 1, la partie annulaire 30 présente une épaisseur A mesurée parallèlement à l'axe de rotation A-A' entre les deux surfaces latérales 44. L'épaisseur A de la partie annulaire 30 est, par exemple, comprise entre 30 mm et 60 mm, notamment sensiblement égale à 45 mm.

La partie annulaire 30 est, par exemple, déplaçable par rapport à la partie cylindrique centrale 28 entre une position de repos (visible sur les Fig. 1 et 2) et une position de contrainte. La partie annulaire 30 est déplacée de la position de repos vers la position de contrainte lorsque la force de freinage est appliquée sur la partie annulaire 30. En particulier, la force de freinage est appliquée sur la partie annulaire 30 par l'élément de freinage 24 lors d'un contact entre la partie annulaire 30 et l'élément de freinage 24. En particulier, la partie annulaire 30 est déplacée en translation selon une direction sensiblement parallèle à l'axe de rotation A-A'.

La partie annulaire 30 est, par exemple, communément appelée couronne du disque de freinage 22.

La partie annulaire 30 emmagasine une importante partie de l'énergie thermique dégagée par la friction avec l'élément de freinage 24.

L'entretoise 32 est, par exemple, formée par une jupe cylindrique s'étendant à partir de la partie cylindrique centrale 28 jusqu'à la partie annulaire 30. Radialement par rapport à l'axe A-A', l'entretoise 32 s'étend donc entre la partie cylindrique centrale 28 et la partie annulaire 30.

L'entretoise 32 s'étend sur au moins une partie de la circonférence de la partie cylindrique centrale 28, par exemple, sur toute la circonférence de la partie cylindrique centrale 28. En d'autres termes, selon cet exemple, l'entretoise 32 joint une partie de la surface externe 37 de la partie cylindrique centrale 28 à une de la surface interne 42 de la partie annulaire 30 de façon ininterrompue sur toute la circonférence du disque de freinage 22.

Selon l'exemple des Fig. 1 et 2, l'entretoise 32 présente une section radiale en forme de S. La section radiale est prise selon un plan comprenant l'axe de rotation A-A'.

En référence à la Fig. 2, la section radiale de l'entretoise 32 présente, par exemple, une première branche 48, une deuxième branche 50 et une troisième branche 52.

La première branche 48 s'étend selon une première direction E1 à partir de la partie annulaire 30, en particulier à partir de la surface interne 42 de la partie annulaire 30 vers la partie cylindrique centrale 28 jusqu'à une première extrémité 56.

La deuxième branche 50 s'étend selon une deuxième direction E2 depuis la première extrémité 56 jusqu'à une deuxième extrémité 58. Avantageusement, la deuxième direction E2 est sensiblement parallèle à l'axe de rotation A-A'. Par exemple, la deuxième branche 50 présente une longueur B mesurée selon l'axe de rotation A-A', par exemple, comprise entre 25 mm et 50 mm, avantageusement sensiblement égale à 42 mm.

La troisième branche 52 s'étendant selon une troisième direction E3 depuis la deuxième extrémité 58 jusqu'à la partie cylindrique centrale 28, en particulier jusqu'à la surface externe 37 de la partie cylindrique centrale 28. Selon l'exemple illustré sur les Fig. 1 et 2, la troisième branche 52 s'étend jusqu'à une des deux extrémités axiales 38 de la partie cylindrique centrale 28.

Les branches 48, 50 et 52 présente une épaisseur C mesurée perpendiculairement à leur direction respective E1, E2 et E3, par exemple, comprise entre 4 mm et 12 mm, avantageusement sensiblement égale à 8 mm. L'épaisseur C est suffisante pour transmettre un couple de freinage entre la partie annulaire 30 et la partie cylindrique centrale 28.

Avantageusement, la section radiale de l'entretoise 32 comprend, en outre, un premier coude 62 entre la première banche 48 et la deuxième branche 50 et un deuxième coude 64 entre la deuxième branche 50 et la troisième branche 52. La longueur B de la deuxième branche 50 est, en particulier, mesurée le long d'une portion rectiligne de la deuxième branche 50 entre le premier coude 62 et le deuxième coude 64.

Le premier coude 62 est, par exemple, incurvé. Il présente un premier profil interne 68 tourné vers la partie annulaire 30 et un premier profil externe 70 opposé au premier profile interne 68. Le premier profil interne 68 présente un premier rayon de courbure interne R1, par exemple, compris entre 10 mm et 18 mm, notamment sensiblement égal à 14 mm. Le premier profil externe 70 présente un premier rayon de courbure externe R2, par exemple, compris entre 18 mm et 26 mm, notamment sensiblement égal à 22 mm. Le premier rayon de courbure interne R1 et le premier rayon de courbure externe R2 sont suffisamment grands pour permettre un déplacement de la partie annulaire 30 par rapport à la partie cylindrique centrale 28 tout en évitant de concentrer des contraintes mécaniques importantes dans le premier coude 62.

Le deuxième coude 64 est, par exemple, incurvé. Il présente un deuxième profil interne 74 tourné vers la partie cylindrique centrale 28 et un deuxième profil externe 76 opposé au deuxième profil interne 74. Le deuxième profil externe 76 présente un deuxième rayon de courbure externe R3, par exemple, compris entre 6 mm et 18 mm, notamment sensiblement égal à 12 mm. Le deuxième profil interne 74 présente un deuxième rayon de courbure interne R4 compris, par exemple, entre 2 mm et 10 mm, avantageusement sensiblement égal à 6 mm. Le deuxième rayon de courbure externe R3 et le deuxième rayon de courbure interne R4 sont suffisamment petits pour assurer une bonne solidarisation entre la deuxième branche 50 et la partie cylindrique centrale 28.

L'entretoise 32 est, par exemple, déplaçable entre une position de repos (visible sur les Fig. 1 et 2) et une position de contrainte dans laquelle elle subit une contrainte mécanique. En particulier, l'entretoise 32 est dans sa position de repos lorsque la partie annulaire 30 est dans sa position de repos. L'entretoise 32 est dans sa position de contrainte lorsque la partie annulaire 30 est dans sa position de contrainte.

L'entretoise 32 est déformable élastiquement et est contrainte vers sa position de repos. En particulier, l'entretoise 32 est ramenée vers sa position de repos lorsque la force de freinage cesse d'être appliquée sur la partie annulaire 30. En étant ramenée vers sa position de repos, l'entretoise 32 entraîne le retour de la partie annulaire 30 vers sa position de repos également.

La forme de l'entretoise 32 permet un contrôle amélioré de la déformation thermomécanique engendrée par la friction entre l'élément de freinage 24 et la partie annulaire 30 lors du freinage. L'entretoise 32 assure l'élasticité du disque de freinage 22. Elle rend possible le déplacement de la partie annulaire 30 tout en la maintenant solidaire de la partie cylindrique centrale 28. Ainsi, en permettant le déplacement de la partie annulaire 30, l'entretoise permet de libérer une portion des contraintes mécaniques exercées sur le disque de freinage 22 lors du freinage.

Grâce à l'invention, le disque de freinage 22 permet un freinage efficace et sûr du véhicule tout en préservant l'intégrité du disque 22, et ce quel que soit la vitesse de rotation de l'arbre rotatif 12.

## Revendications

1. Disque de freinage (22) d'un frein à disque (14) d'un véhicule, notamment un véhicule ferroviaire, comprenant :
- une partie cylindrique centrale (28) s'étendant sensiblement selon un axe de rotation (A-A') et destinée à être solidaire en rotation d'un arbre rotatif (12) du véhicule ;
- une partie annulaire (30) centrée sur l'axe de rotation (A-A'), s'étendant radialement par rapport à l'axe de rotation (A-A') à l'écart de la partie cylindrique centrale (28) et destinée à entrer en contact avec un élément de freinage (24) du frein à disque (14) ; et
- une entretoise (32) reliant la partie cylindrique centrale (28) à la partie annulaire (30) ;
la partie cylindrique centrale (28), l'entretoise (32) et la partie annulaire (30) étant venues de matière,
la partie cylindrique centrale (28), l'entretoise (32) et la partie annulaire (30) étant formées par de l'acier 28CDV5.

2. Disque de freinage (22) selon la revendication 1, dans lequel la partie annulaire (30) est déplaçable par rapport à la partie cylindrique centrale (28) entre une position de repos dans laquelle l'entretoise (32) est dans une position de repos et une position de contrainte dans laquelle l'entretoise (32) subit une contrainte mécanique, la partie annulaire (30) étant déplacée de la position de repos vers la position de contrainte lorsqu'une force de freinage est appliquée sur la partie annulaire (30), l'entretoise (32) étant déformable élastiquement et étant contrainte vers sa position de repos.

3. Disque de freinage (22) selon la revendication 1 ou 2, dans lequel l'entretoise (32) présente une section radiale en forme de S, la section radiale de l'entretoise (32) présentant des première, deuxième et troisième branches (48 ; 50 ; 52), la première branche (48) s'étendant selon une première direction (E1) à partir de la partie annulaire (30) vers la partie cylindrique centrale (28) jusqu'à une première extrémité (56), la deuxième branche (50) s'étendant selon une deuxième direction (E2) depuis la première extrémité (56) jusqu'à une deuxième extrémité (58) et la troisième branche (52) s'étendant selon une troisième direction (E3) depuis la deuxième extrémité (58) jusqu'à la partie cylindrique centrale (28).

4. Disque de freinage (22) selon la revendication 3, dans lequel la section radiale de l'entretoise (32) comprend un coude (62) entre la première branche (48) et la deuxième branche (50), présentant un premier profil interne (68) tourné vers la partie annulaire (30) et un premier profil externe (70) opposé au premier profil interne (68), le premier profile interne (68) présentant un premier rayon de courbure interne (R1) compris entre 10 mm et 18 mm et le premier profile externe (70) présentant un premier rayon de courbure externe (R2) compris entre 18 mm et 26 mm.

5. Disque de freinage (22) selon la revendication 3 ou 4, dans lequel la section radiale de l'entretoise (32) comprend un coude (64) entre la deuxième branche (50) et la troisième branche (52), présentant un deuxième profil interne (74) tourné vers la partie cylindrique centrale (28) et un deuxième profile externe (76) opposé au deuxième profil interne (74), le deuxième profil externe (76) présentant un deuxième rayon de courbure externe (R3) compris entre 6 mm et 18 mm et le deuxième profil interne (74) présentant un deuxième rayon de courbure interne (R4) compris entre 2 mm et 10 mm.

6. Disque de freinage (22) selon la revendication 4 ou 5, dans lequel la deuxième direction (E2) est sensiblement parallèle à l'axe de rotation (A-A'), la deuxième branche (50) présentant avantageusement une longueur (B) mesurée selon l'axe de rotation (A-A') comprise entre 25 mm et 50 mm.

7. Disque de freinage (22) selon l'une quelconque des revendications 4 à 6, dans lequel les branches (48 ; 50 ; 52) présentent chacune une épaisseur (C) mesurée perpendiculairement à leur direction (E1 ; E2 ; E3) respective comprise entre 4 mm et 12 mm.

8. Disque de freinage (22) selon l'une quelconque des revendications 4 à 7, dans lequel la partie cylindrique centrale (28) s'étend axialement entre deux extrémités axiales (38), la partie cylindrique centrale (28) présentant une longueur (X) mesurée axialement entre les deux extrémités axiales (38), la troisième branche (52) s'étendant jusqu'à une des deux extrémités axiales (38) de la partie cylindrique centrale (28), la partie annulaire (30) s'étendant dans un plan d'extension (P) sensiblement orthogonal à l'axe de rotation (A-A'), le plan d'extension (P) traversant la partie cylindrique centrale (28) sensiblement en le milieu de sa longueur (X).

9. Frein à disque (14) d'un véhicule, notamment un véhicule ferroviaire, comprenant un disque de freinage (22) selon l'une quelconque des revendications 1 à 8 et un élément de freinage (24), l'élément de freinage (24) étant déplaçable axialement par rapport à l'axe de rotation (A-A') entre une position inactive dans laquelle l'élément de freinage (24) est à l'écart de la partie annulaire (30) et une position active dans laquelle l'élément de freinage (24) est en contact avec la partie annulaire (30) et applique une force de freinage sur la partie annulaire (30).

10. Essieu (10) d'un véhicule, notamment d'un véhicule ferroviaire, comprenant un arbre rotatif (12) et un disque de freinage (22) selon l'une quelconque des revendications 1 à 8, l'arbre rotatif (12) s'étendant selon l'axe de rotation (A-A'), la partie cylindrique centrale (28) étant solidaire en rotation de l'arbre rotatif (12) du véhicule.

## Patentansprüche

1. Bremsscheibe (22) einer Scheibenbremse (14) eines Fahrzeugs, insbesondere eines Schienenfahrzeugs, umfassend:
- einen mittleren zylindrischen Abschnitt (28), der sich im Wesentlichen entlang einer Drehachse (A-A') erstreckt und dazu bestimmt ist, drehfest mit einer Drehwelle (12) des Fahrzeugs verbunden zu werden;
- einen ringförmigen Abschnitt (30), der auf der Drehachse (A-A') zentriert ist, sich radial zu der Drehachse (A-A') von dem mittleren zylindrischen Abschnitt (28) weg erstreckt und dazu bestimmt ist, mit einem Bremselement (24) der Scheibenbremse (14) in Kontakt zu kommen; und
- einen Abstandhalter (32), der den mittleren zylindrischen Abschnitt (28) mit dem ringförmigen Abschnitt (30) verbindet;
der mittlere zylindrische Abschnitt (28), der Abstandhalter (32) und der ringförmige Abschnitt (30) aus einem Material sind,
der mittlere zylindrische Abschnitt (28), der Abstandhalter (32) und der ringförmige Abschnitt (30) aus Stahl 28CDV5 geformt sind.

2. Bremsscheibe (22) nach Anspruch 1, wobei der ringförmige Abschnitt (30) in Bezug auf den mittleren zylindrischen Abschnitt (28) zwischen einer Ruheposition, in der der Abstandhalter (32) in einer Ruheposition ist, und einer Belastungsposition, in der der Abstandhalter (32) einer mechanischen Belastung ausgesetzt ist, verschiebbar ist, der ringförmige Abschnitt (30) aus der Ruheposition in die Belastungsposition bewegt wird, wenn eine Bremskraft auf den ringförmigen Abschnitt (30) ausgeübt wird, wobei der Abstandhalter (32) elastisch verformbar ist und in Richtung seiner Ruheposition belastet wird.

3. Bremsscheibe (22) nach Anspruch 1 oder 2, wobei der Abstandhalter (32) einen S-förmigen radialen Querschnitt aufweist, wobei der radiale Querschnitt des Abstandhalters (32) einen ersten, einen zweiten und einen dritten Schenkel (48; 50; 52) aufweist, wobei sich der erste Schenkel (48) in einer ersten Richtung (E1) von dem ringförmigen Abschnitt (30) zu dem mittleren zylindrischen Abschnitt (28) bis zu einem ersten Ende (56) erstreckt, der zweite Schenkel (50) sich in einer zweiten Richtung (E2) von dem ersten Ende (56) bis zu einem zweiten Ende (58) erstreckt und der dritte Schenkel (52) sich in einer dritten Richtung (E3) von dem zweiten Ende (58) bis zu dem mittleren zylindrischen Abschnitt (28) erstreckt.

4. Bremsscheibe (22) nach Anspruch 3, wobei der radiale Querschnitt des Abstandhalters (32) eine Biegung (62) zwischen dem ersten Schenkel (48) und dem zweiten Schenkel (50) umfasst, die ein erstes inneres Profil (68), das dem ringförmigen Abschnitt (30) zugewandt ist, und ein erstes äußeres Profil (70) gegenüber dem ersten inneren Profil (68) aufweist, wobei das erste innere Profil (68) einen ersten inneren Krümmungsradius (R1) zwischen 10 mm bis 18 mm und das erste äußere Profil (70) einen ersten äußeren Krümmungsradius (R2) zwischen 18 mm bis 26 mm aufweist.

5. Bremsscheibe (22) nach Anspruch 3 oder 4, wobei der radiale Querschnitt des Abstandhalters (32) eine Biegung (64) zwischen dem zweiten Schenkel (50) und dem dritten Schenkel (52) umfasst, die ein zweites inneres Profil (74), das dem mittleren zylindrischen Abschnitt (28) zugewandt ist, und ein zweites äußeres Profil (76) gegenüber dem zweiten inneren Profil (74) aufweist, wobei das zweite äußere Profil (76) einen zweiten äußeren Krümmungsradius (R3) zwischen 6 mm und 18 mm aufweist und das zweite innere Profil (74) einen zweiten inneren Krümmungsradius (R4) zwischen 2 mm und 10 mm aufweist.

6. Bremsscheibe (22) nach Anspruch 4 oder 5, wobei die zweite Richtung (E2) im Wesentlichen parallel zu der Drehachse (A-A') ist, wobei der zweite Schenkel (50) vorteilhafterweise eine entlang der Drehachse (A-A') gemessene Länge (B) zwischen 25 mm und 50 mm aufweist.

7. Bremsscheibe (22) nach einem der Ansprüche 4 bis 6, wobei die Schenkel (48; 50; 52) jeweils eine senkrecht zu ihrer jeweiligen Richtung (E1; E2; E3) gemessene Dicke (C) zwischen 4 mm und 12 mm aufweisen.

8. Bremsscheibe (22) nach einem der Ansprüche 4 bis 7, wobei sich der mittlere zylindrische Abschnitt (28) axial zwischen zwei axialen Enden (38) erstreckt, wobei der mittlere zylindrische Abschnitt (28) eine Länge (X) aufweist, die axial zwischen den zwei axialen Enden (38) gemessen wird, der dritte Schenkel (52) sich bis zu einem der beiden axialen Enden (38) des mittleren zylindrischen Abschnitts (28) erstreckt, der ringförmige Abschnitt (30) sich in einer Erstreckungsebene (P) erstreckt, die im Wesentlichen orthogonal zu der Drehachse (A-A') ist, wobei die Erstreckungsebene (P) den mittleren zylindrischen Abschnitt (28) im Wesentlichen in der Mitte seiner Länge (X) durchquert.

9. Scheibenbremse (14) eines Fahrzeugs, insbesondere eines Schienenfahrzeugs, mit einer Bremsscheibe (22) nach einem der Ansprüche 1 bis 8 und einem Bremselement (24), wobei das Bremselement (24) axial in Bezug auf die Drehachse (A-A') zwischen einer inaktiven Position, in der das Bremselement (24) von dem ringförmigen Abschnitt (30) beabstandet ist, und einer aktiven Position, in der das Bremselement (24) den ringförmigen Abschnitt (30) berührt und eine Bremskraft auf den ringförmigen Abschnitt (30) ausübt, verschiebbar ist.

10. Achse (10) eines Fahrzeugs, insbesondere eines Schienenfahrzeugs, umfassend eine Drehwelle (12) und eine Bremsscheibe (22) nach einem der Ansprüche 1 bis 8, wobei sich die Drehwelle (12) entlang der Drehachse (A-A') erstreckt und der mittlere zylindrische Abschnitt (28) drehfest mit der Drehwelle (12) des Fahrzeugs verbunden ist.

## Claims

1. Brake disc (22) for a disc brake (14) of a vehicle, in particular a rail vehicle, comprising:
- a central cylindrical part (28) extending substantially along an axis of rotation (A-A') and intended to be fixed in rotation to a rotary shaft (12) of the vehicle;
- an annular portion (30) centred on the axis of rotation (A-A'), extending radially with respect to the axis of rotation (A-A') away from the central cylindrical portion (28) and intended to come into contact with a braking element (24) of the disc brake (14); and
- a spacer (32) connecting the central cylindrical part (28) to the annular part (30);
the central cylindrical part (28), the spacer (32) and the annular part (30) being integral,
the central cylindrical part (28), the spacer (32) and the annular part (30) being formed by 28CDV5 steel.

2. A brake disc (22) according to claim 1, wherein the annular portion (30) is displaceable relative to the central cylindrical portion (28) between a rest position in which the spacer (32) is in a rest position and a stressed position in which the spacer (32) is under a mechanical stress, the annular portion (30) being displaced from the rest position to the stressed position when a braking force is applied to the annular portion (30), the spacer (32) being elastically deformable and being constrained towards its rest position.

3. Brake disc (22) according to claim 1 or 2, in which the spacer (32) has an S-shaped radial section, the radial section of the spacer (32) having first, second and third arms (48; 50; 52), the first arm (48) extending in a first direction (E1) from the annular part (30) towards the central cylindrical part (28) to a first end (56), the second arm (50) extending in a second direction (E2) from the first end (56) to a second end (58), and the third arm (52) extending in a third direction (E3) from the second end (58) to the central cylindrical part (28).

4. Brake disc (22) according to claim 3, in which the radial section of the spacer (32) comprises a bend (62) between the first branch (48) and the second arm (50), having a first internal profile (68) facing the annular portion (30) and a first external profile (70) opposite the first internal profile (68), the first internal profile (68) having a first internal radius of curvature (R1) of between 10 mm and 18 mm and the first external profile (70) having a first external radius of curvature (R2) of between 18 mm and 26 mm.

5. Brake disc (22) according to claim 3 or 4, wherein the radial section of the spacer (32) comprises a bend (64) between the second arm (50) and the third arm (52), having a second internal profile (74) facing the central cylindrical part (28) and a second external profile (76) opposite the second internal profile (74), the second external profile (76) having a second external radius of curvature (R3) of between 6 mm and 18 mm and the second internal profile (74) having a second external radius of curvature (R4) of between 2 mm and 10 mm.

6. Brake disc (22) according to claim 4 or 5, in which the second direction (E2) is substantially parallel to the axis of rotation (A-A'), the second arm (50) advantageously having a length (B) measured along the axis of rotation (A-A') of between 25 mm and 50 mm.

7. Brake disc (22) according to any one of claims 4 to 6, in which the arms (48; 50; 52) each have a thickness (C) measured perpendicularly to their respective direction (E1; E2; E3) of between 4 mm and 12 mm.

8. A brake disc (22) according to any one of claims 4 to 7, wherein the central cylindrical portion (28) extends axially between two axial ends (38), the central cylindrical part (28) having a length (X) measured axially between the two axial ends (38), the third arm (52) extending to one of the two axial ends (38) of the central cylindrical part (28), the annular portion (30) extending in a plane of extension (P) substantially orthogonal to the axis of rotation (A-A'), the plane of extension (P) passing through the central cylindrical part (28) substantially in the middle of its length (X).

9. Disc brake (14) for a vehicle, in particular a rail vehicle, comprising a brake disc (22) according to any one of claims 1 to 8 and a braking element (24), the braking element (24) being axially displaceable relative to the axis of rotation (A-A') between an inactive position in which the braking element (24) is at a distance from the annular part (30) and an active position in which the braking element (24) is in contact with the annular part (30) and applies a braking force to the annular part (30).

10. Axle (10) of a vehicle, in particular a rail vehicle, comprising a rotary shaft (12) and a brake disc (22) according to any one of claims 1 to 8, the rotary shaft (12) extending along the axis of rotation (A-A'), the central cylindrical part (28) being integral in rotation with the rotary shaft (12) of the vehicle.
